# EUROPEAN PATENT SPECIFICATION

(11) **EP 1 617 179 B1**
(45) Date of publication and mention of the grant of the patent: **19.09.2007**
(21) Application number: 05020377.7
(22) Date of filing: 07.12.2001
(51) Int. Cl.: G01C 21/00, G08G 1/137, G09B 29/00

(54) **Position information identifier providing system, and position information identifier transmitting method and device**
System zum Bereitstellen eines Positionsinformationsindentifizierers und Verfahren und Vorrichtung zum Übertragen von Positionsinformationsidentifizierern
Systeme générant un identificateur d'information de position, procédé et dispositif de transmission de cet identificateur

(30) Priority: 08.12.2000 JP 2000375321
(43) Date of publication of application: 18.01.2006
(62) Divisional of application: 01999787.3
(73) Proprietor: MATSUSHITA ELECTRIC INDUSTRIAL CO., LTD, Kadoma-shi, Osaka 571-8501 (JP)
(72) Inventor: Adachi, Shinya, Yokohama-shi Kanagawa, 227-0038 (JP)
(74) Representative: Balsters, Robert

(56) References cited:
- EP-A- 0 837 341
- WO-A-98/54682
- US-A- 5 887 269

## Description

### <Technical Field>

The present invention relates to a system for providing updating information of a position information identifier, which defines a road position, to an on-board device or the like, a method for transmitting the position information identifier in that case, and a device for executing the method. More particularly, the invention aids a system for providing traffic information by using the position information identifier.

### <Background of the Invention>

Recently, the vehicle carrying thereon an on-board navigation device rapidly increases its number. The on-board navigation device contains digital map database, and receives information by a VICS (vehicle information communication system), which provides traffic congestion information or traffic accident information, through media such as FM multiplex broadcasting, or radio or optical beacon, displays a congested or accident position on a map, and adds those pieces of information to the condition and executes a route search process based on the condition.

The digital map database is currently prepared by several companies in Japan. The map data contains errors as the fatality of the scale map. Those errors contained in the map data are different for each company.

In the transmission of traffic information, e.g., the position of a traffic accident on the on-board navigation device, if the longitude and latitude data representative of that position is solely presented, the on-board navigation device mistakenly recognizes a position on a different road as the accident position, depending on some types of the digital map database contained therein.

To avoid such an unexactness of the information transmission, in the VICS information, road positions are designated by using position information identifiers, such as node numbers assigned to nodes, e.g., intersections, link numbers assigned to the links each between adjacent nodes or the like. In the digital map database of every company, the intersections and roads are stored in association with node numbers and link numbers. Accordingly, each road position described in terms of the VICS information may uniquely be specified.

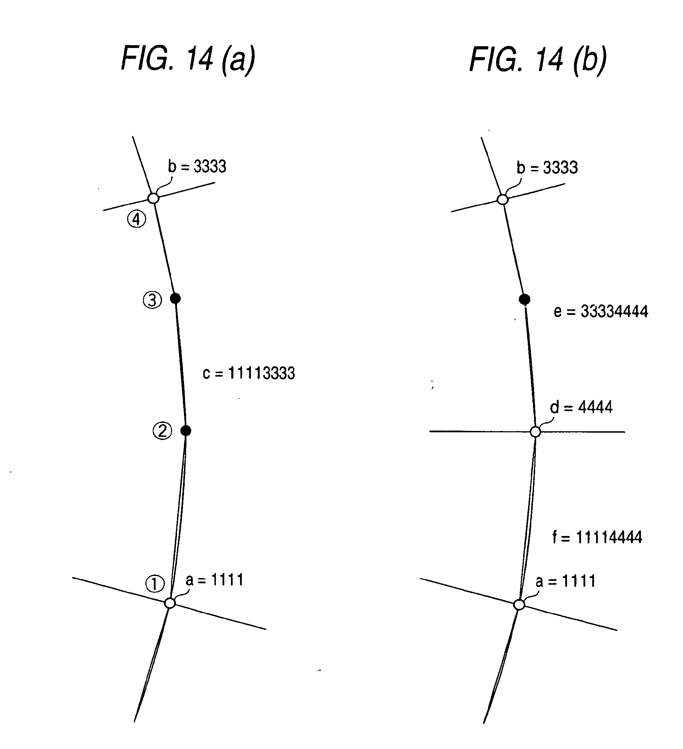

The position information identifier is defined according to predetermined rules. As shown in Fig. 14(a), each node has a node number, which is uniquely assigned to and indicates the node. A link number of a road "c" located between a node "a" (node number = 1111) and another node "b" (node number = 3333) is assigned "11113333" in which the large node number "3333" follows the small node number "1111". A curve of the road is approximated by a polygonal line, apexes of the polygonal line are set as interpolating points, the node "a" of the small node number is designated as an interpolating point (1), and the node "b" is designated as the final interpolating point, and the interpolating points located between the nodes "a" and "b" are sequentially numbered.

As shown in Fig. 14(b), in a case where a new road is constructed and another node "d" (node number = 4444) is provided anew, the old link number "11113333" is substituted by a new line number 11114444 assigned to a link "f" between the nodes "a" and "d", and another new link number "33334444" assigned to a link "e" between the nodes "d" and "b".

Updating information of the position information identifier is recorded into a recording medium, and distributed to the related map data manufacturing companies, from a distribution source. Each company modifies the company's map data on the basis of the updated position information identifier. Some companies accept a customer's request of modifying the map data as the after-sales service to the map data sold.

In the VICS information, even after the position information identifier is updated, traffic information containing both the position information identifier after updated and the position information identifier before updated is provided for a predetermined period of time, while taking the on-board navigation devices containing the digital map data before updated into consideration.

Road construction and alteration will be carried out continuouslyin thefuture,and the position information identifier will be updated repeatedly. Accordingly, the money as invested into the maintenance and after-sales service by the map data manufacturers, is extremely large.

In the VICS information, it is necessary to send the new and old position information identifiers redundantly. Therefore, to maintain the information providing system, which utilizes the position information identifiers, much cost is taken in various forms, such as economic burden to prepare its data, and data transmission inefficiency.

Accordingly, an object of the present invention is to provide a system for aiding the information providing service utilizing the position information identifiers, and a method and apparatus for transmitting position information identifiers in that system.

### <DISCLOSURE OF THE INVENTION>

According to one aspect of the invention, there is provided a position information identifier providing system, which includes:
1) information providing means for providing to a receiving device containing a database of position information identifiers and a database of a digital map, only the information using said position information identifiers; and
2) position information identifier information providing means for providing only updated position information identifier information to said receiving device, in addition to said information providing means.

According to another aspect of the invention, there is provided a method for transmitting to a receiving device containing a database of position information identifiers and a database of a digital map, information on said position information identifier as updated,
wherein
1) information on said position information identifier and coordinate row information of nodes and interpolating points, both constitutingsaid positioninformationidentifier,istransmitted to said receiving device, and
2) said receiving device executes a map matching process to determine a position on said digital map, which corresponds to said position information identifier.

According to still another aspect, there is provided a position information identifier transmitter for generating and transmitting position information identifier transmitting information containing information on a position information identifier and coordinate row information of nodes and interpolating points,both constitutingsaid positioninformation identifier.

According to still another aspect of the invention, there is provided a receiving device which contains a database on a position information identifier and a database on a digital map, and receives information using said position information identifier and displays a position on a digital map, which corresponds to said position information identifier, the improvement being characterized in that
1) said receiving device receives information of an updated position information identifier and position information identifier transmitting information containing information on a position information identifier and coordinate row information of nodes and interpolating points, both constituting said position information identifier,
2) said receiving device stores said position information identifier into said position information identifier database, and
3) said receiving device carries out a map matching process by using said coordinate row information to thereby determine a position of said position information identifier on a digital map.

The system of the invention is capable of supplementarily supporting a scheme of providing information by using the position information identifier. The burden imposed on the map data manufacturer, such as the maintenance and after-sales service, which result from the updating of the position information identifier, is lightened. Further, there is no need of transmitting the new and old position information identifiers redundantly to the VICS information.

Where the position information identifier transmitting method of the invention is employed, if different digital map data is used, the receiving side device reliably makes the correspondence between the position information identifier and the position on the digital map.

### <BRIEF DESCRIPTION OF THE DRAWINGS>

Fig. 1 is a block diagram showing an arrangement of a position information identifier providing system, which is an embodiment of the present invention,
Fig. 2 is a diagram showing a data configuration of position information identifier information provided in the embodiment system,

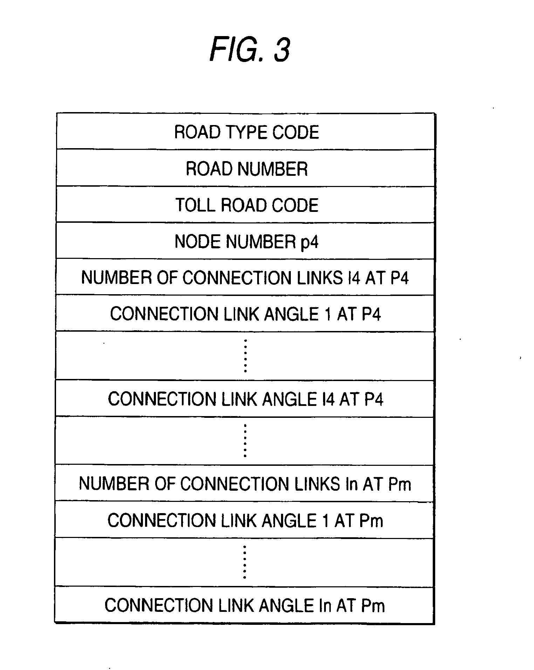

Fig. 3 is a diagram showing a data configuration of supplementary information provided in the embodiment system,
Fig. 4 is a diagram showing a data configuration of accident information, which is provided as traffic information in the embodiment system,

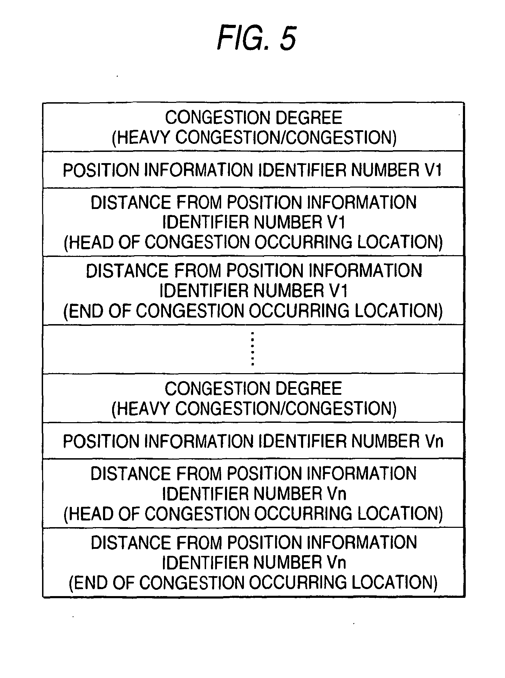

Fig. 5 is a diagram showing a data configuration of traffic congestion information, which is provided as traffic information in the embodiment system,
Fig. 6 is a flow chart showing operations at respective portions in the embodiment system,
Fig. 7 is a diagram showing a first application of the embodiment system,
Fig. 8 is a diagram showing a second application of the embodiment system,
Fig. 9 is a diagram showing a third application of the embodiment system,
Fig. 10 is a diagram showing a position information identifier in the embodiment system,
Fig. 11 is a diagram showing another position information identifier in the embodiment system,
Fig. 12 is a diagram showing yet another position information identifier in the embodiment system,
Fig. 13 is a diagram showing an application other than the transmission of the updated position information identifier in the embodiment system, and
Figs. 14(a) and 14(b) are diagrams for explaining the updating of the position information identifier.

### <BEST MODES FOR CARRYING OUT THE INVENTION>

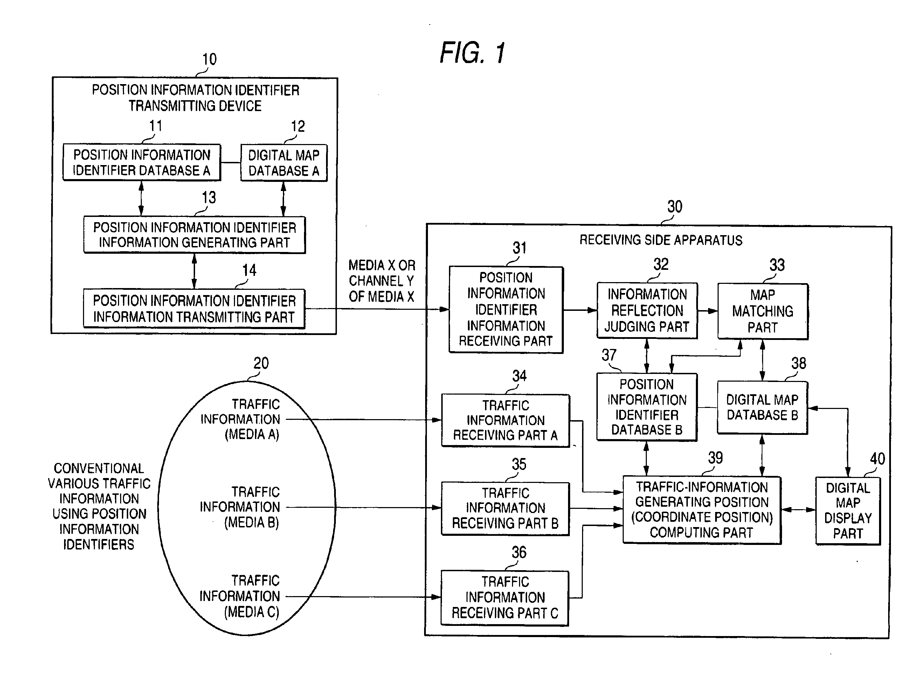

A system of an embodiment according to the invention, as shown in Fig. 1, is made up of media 20 for providing various pieces of traffic information by using position information identifiers, a position information identifier transmitting device 10 for providing information of the position information identifiers per se, and a receiving side device 30 which receives traffic information from the media 20 and receives position information identifier information from the position information identifier transmitting device 10.

The position information identifier transmitting device 10 includes a new position information identifier database A 11, a digital map database A 12, a position information identifier transmitting information generating part 13 for generating transmitting information of position information identifiers, and a position information identifier information transmitting part 14 for transmitting generated information of position information identifiers.

The receiving side device 30 includes a position information identifier database B 37, a digital map database B 38, a position information identifier information receiving part 31 which receives position information identifier information from the position information identifier transmitting device 10, an information reflection judging part 32 which judges the position information identifiers and selects those position information identifiers needed by the receiver unit, a map matching part 33 which executes a map matching process to determine a position of the position information identifier on the digital map, traffic information receiving parts 34, 35 and 36 for receiving traffic information frommedia, a traffic-information generating position computing part 39 which computes a position where an event, such as traffic accident or traffic congestion, occurs, from the information received, and a digital map display part 40 which displays the position where the event occurs.

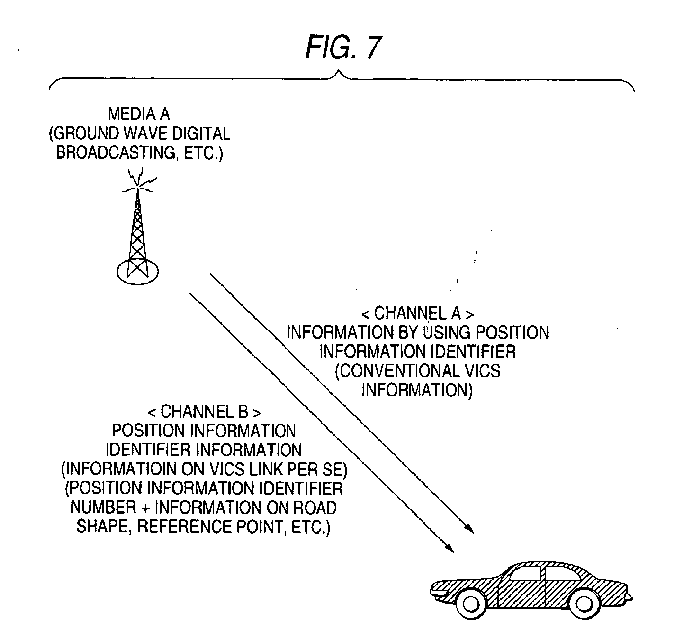

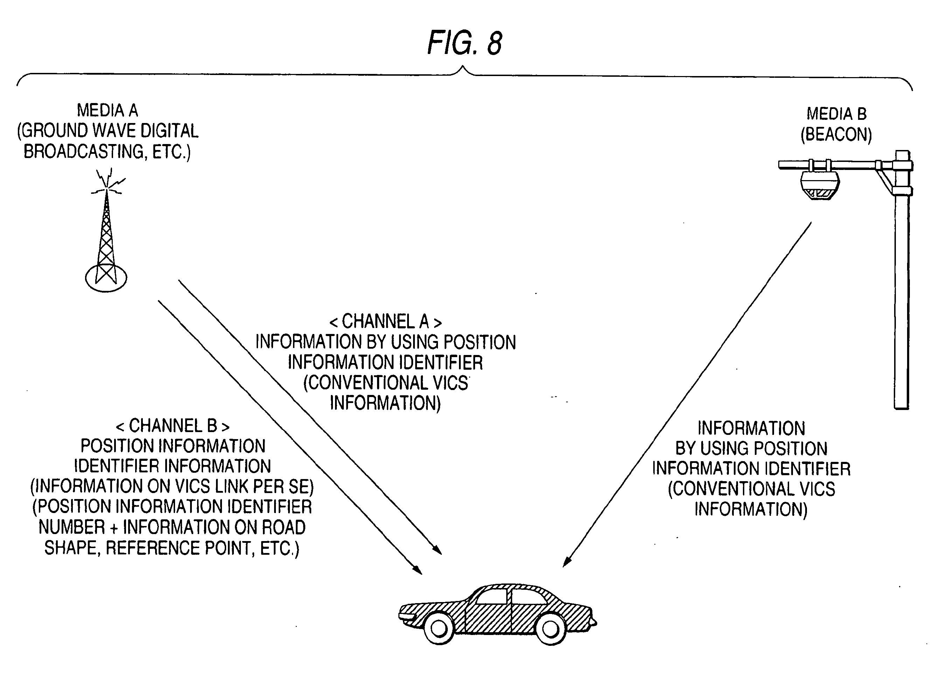

The receiving side device 30 is mounted on a vehicle. Traffic information are provided by media, such as a traffic information providing channel (channel A) of ground wave digital broadcasting as shown in Fig. 7 and a beacon as shown in Fig. 8. Information on the position information identifier is provided by a position information identifier information providing channel (channel B) of the ground wave digital broadcasting, for example.

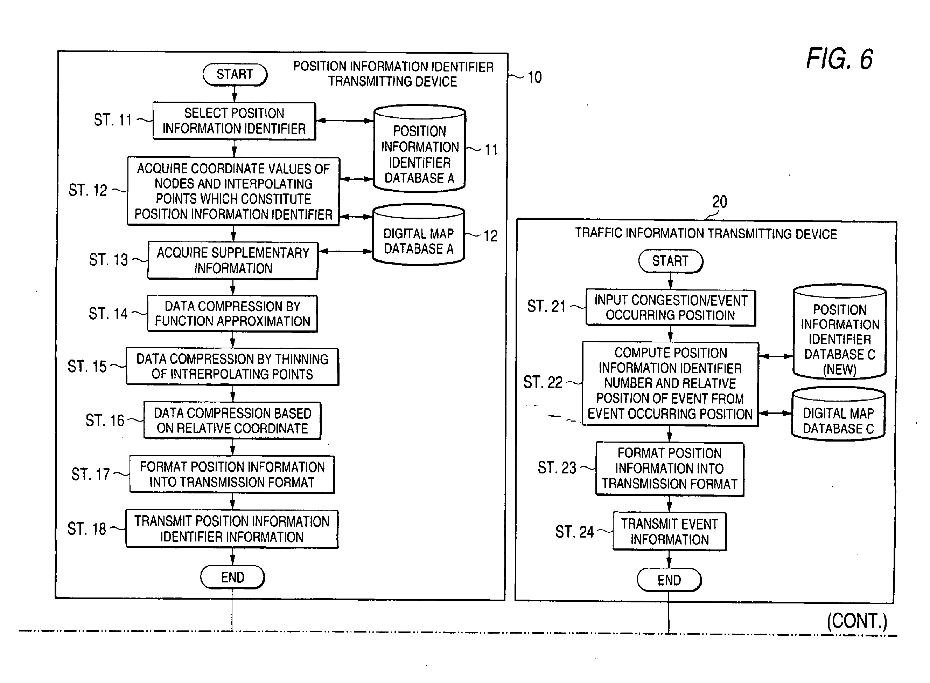

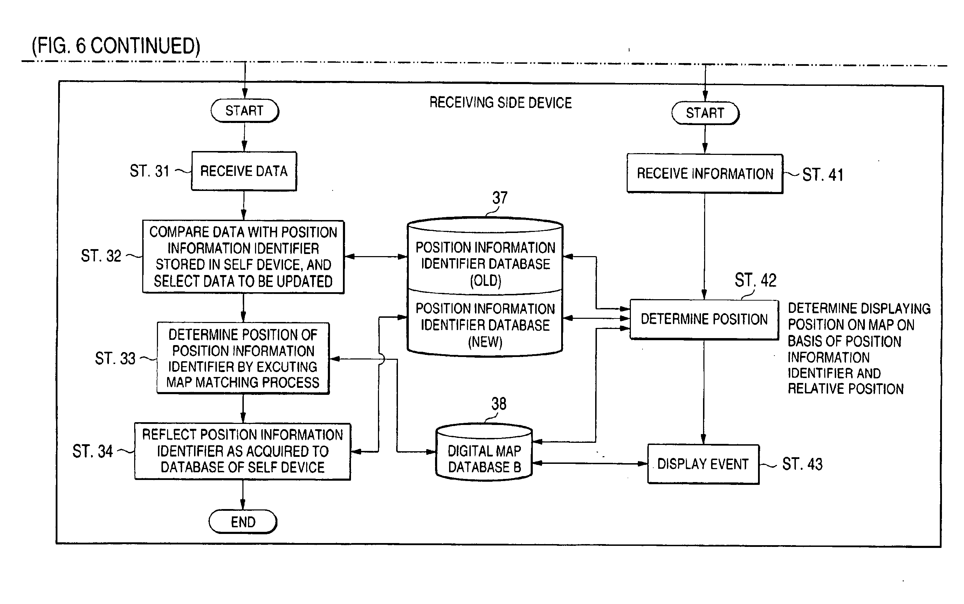

Fig. 6 shows operating procedures of the position information identifier transmitting device 10, the traffic information transmitting device 20 and the receiving side device 30.

The following operation is performed in the position information identifier transmitting device 10.

Step 11: The position information identifier transmitting information generating part 13 selects a new position information identifier (e.g., link data) from the position information identifier database A 11, or selects information of an position information identifier containing a position of or designated by the receiver unit.

Step 12: The position information identifier transmitting information generating part acquires coordinate values (longitude/latitude) of nodes and interpolating points, which constitute the position information identifier, from the digital map database A 12, and generates a coordinate row.

Step 13: The position information identifier transmitting information generating part further acquires supplementary information indicating the attributes of the nodes and the links each between adjacent nodes, from the digital map database A 12. The supplementary information includes information on road type code, roadnumber, the number of connection links at the intersection node, and connection link angles of the connection links and others.

Step 14: When a configuration of an array of interpolating points may be approximated by a function, the array configuration is expressed by the function, whereby the coordinate row data is compressed.

Step 15: When the interpolating points are linearly arrayed, the interpolating points are thinned to compress the coordinate row data.

Step 16: The coordinate value of the first node in the coordinate row is expressed by the absolute coordinate. The coordinate values of the second and subsequent nodes (or interpolating points) are expressed, to compress the data amount, by the relative coordinate in a manner that a difference between the coordinate value of the first node and the coordinate value of the preceding node (or the interpolating point) .

Step 17: Information (link number) of the position information identifier and information of the coordinate row or the supplementary information are formatted into a transmission format.

Step 18: The position information identifier information transmitting part 14 transmits this data.

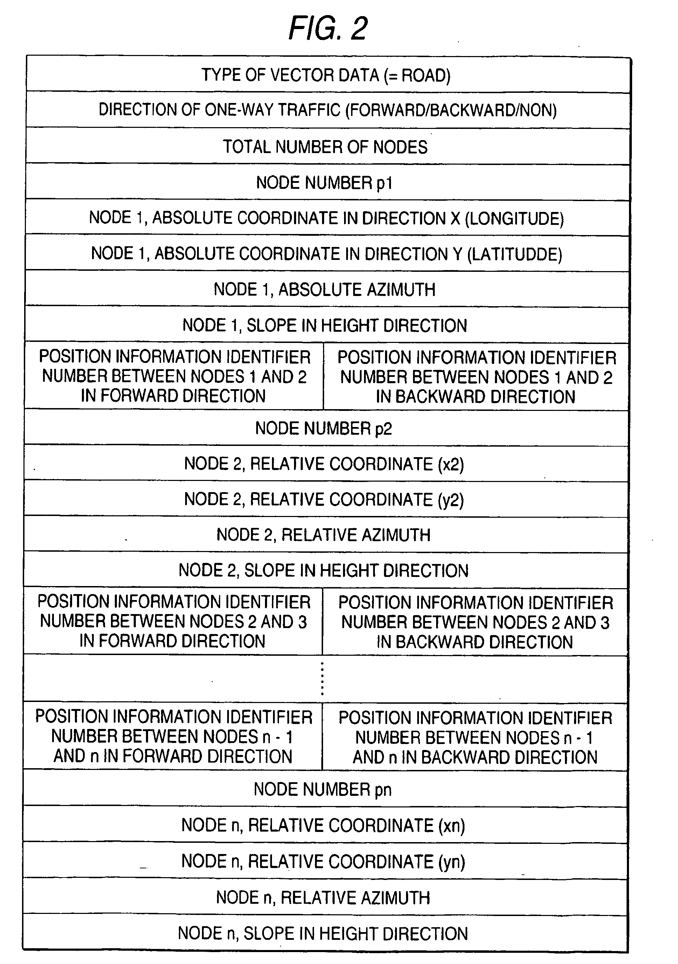

Fig. 2 exemplarily shows a data configuration of the position information identifier information, and the added road information is exemplarily shown.

The receiving side device 30 which has received the position information identifier information and the supplementary information performs following operation.

Step 31: The position information identifier information receiving part 31 receives the data.

Step 32: The information reflection judging part 32 compares the received data with the position information identifiersstoredinthe position information identifier database B 37, and selects the position information identifier to be updated from the received data, and stores the selected position information identifier into the position information identifier database B 37.

In this case, when the received information is not contained in the position information identifier database, or when the received information is newer than the data stored in the self device, the received position information identifier may be stored in the position information identifier database B 37.

Step 33: The map matching part 33 carries out a map matching process of the data of the coordinate row contained in the position information identifier information to the data of the digital map database B 38 to thereby determine a position of the position information identifier on the digital map. At this time, the map matching part makes a short list of candidate points of the position information identifier positions by referring to the supplementary information , azimuth information of the nodes contained in the position information identifier information, height information and the like.

Step 34: The information reflection judging part 32 associates the previously stored position information identifier with the position on the digital map, which is determined by the map matching part.

Inthisway, data of the new position information identifier is stored into the position information identifier database B 37.

The traffic information transmitting device 20 provides traffic information in the following procedure.

Step 21: Position where an event, such as traffic congestion or traffic accident, occurs, is entered.

Step 22: A relative distance (relative position) to the event occurring position is computed using a position information identifier (link number) of the road where the event occurs, and the nodes.

Step 23: A format of those pieces of position information is converted to a transmission format.

Step 24: The information transmission formatted is then transmitted in the form of event information.

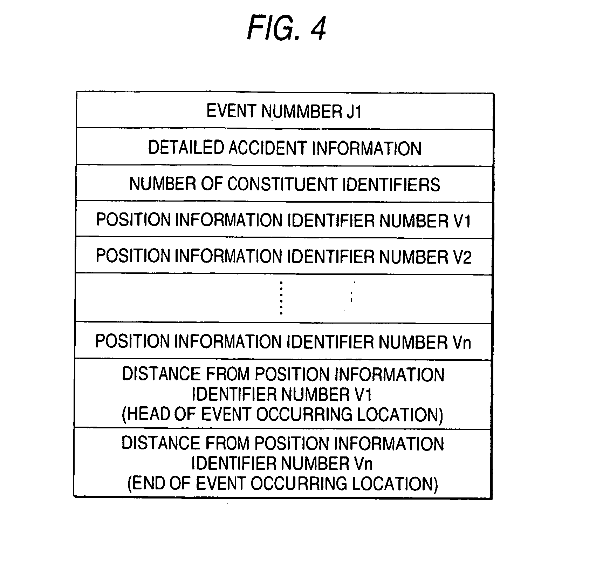

Fig. 4 shows event information presented when a traffic accident occurs, and Fig. 4 shows event information presented at the time of traffic congestion.

The receiving side device 30 that receives the event information operates in the following way.

Step 41: The traffic information receiving parts 34 to 36 receive the event information.

Step 42: The traffic-information generating position computing part 39 specifies a road on the digital map, which contains an event occurring position, by using the position information identifier contained in the event information and the data of the position information identifier database B 37 and the digital map database B 38, and specifies the event occurring position on the road based on a relative position contained in the event information.

Step 43: The event occurring position is visually presented on the map displayed in the digital map display part 40.

Thus, in this system, the position information identifiers stored in the receiving side device are automatically updated according to the information from the position information identifier transmitter 10, and the newest position information identifier is stored in the receiving side device. For this reason, the traffic information transmitting device is able to provide traffic information by using only the newest position information identifier.

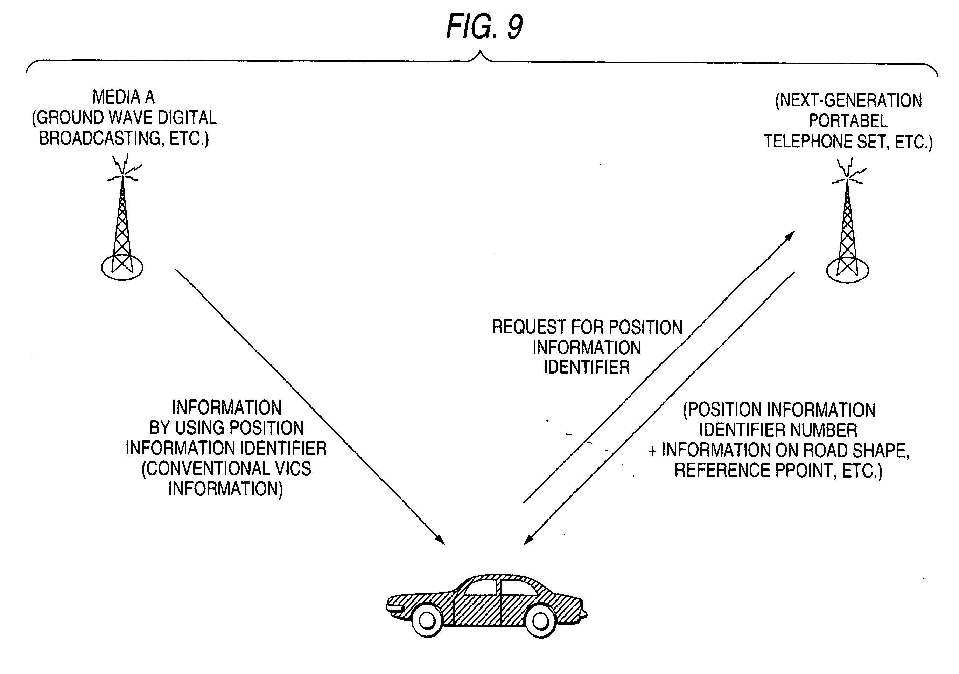

Also in the system, as shown in Fig. 9, the information of the position information identifier may be received from other media than the media providing traffic information, by way of a portable telephone set. In this case, when the position information identifier, which is not found in the self position information identifier database B 37, is contained in the traffic information, the receiving side device requests the position information identifier providing media to send the position information identifier, by wayof the portable telephone set. Upon receipt of this, the position information identifier providing media sends the requested position information identifier to the receiving side device.

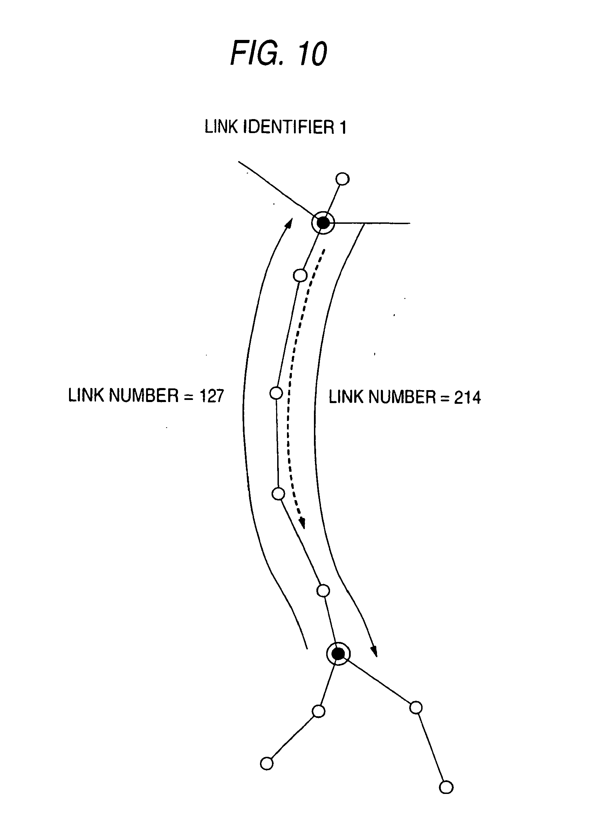

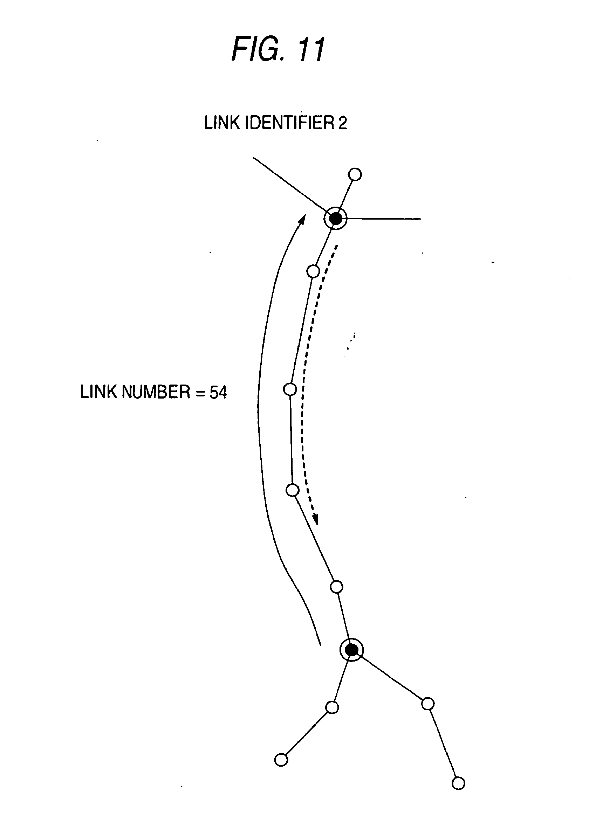

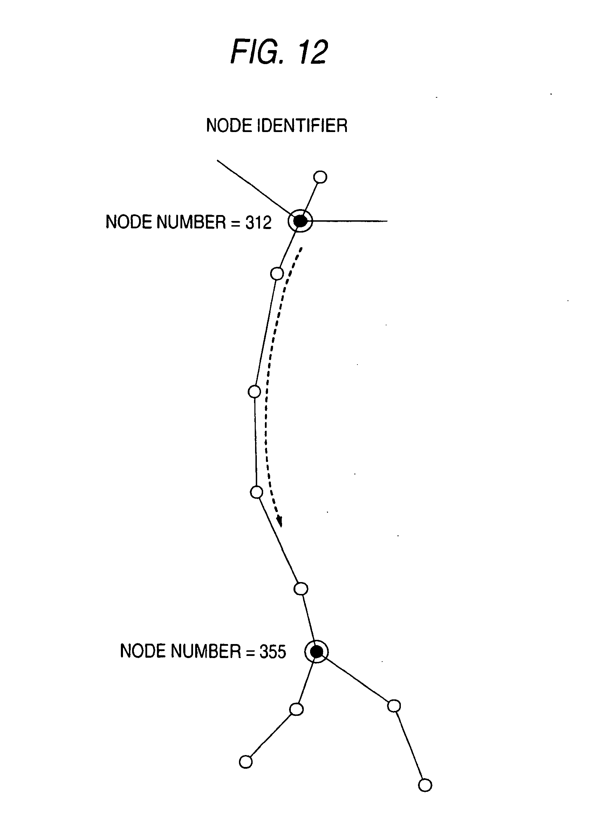

Some examples of the position information identifiers are presented:
(1) "Position information identifier 1" (Fig. 10);
   "Links" each connecting the intersections are numbered every area to advance, and the road interval and direction are expressed by one number assigned to the link. VICS links or the like, currently operated in trunk roads in Japan may be enumerated for this position information identifier.
(2) "Position information identifier 2" (Fig. 11);
   It is defined without using the direction, and the direction is added to dynamic information.
(3) "Node identifier " (Fig. 12);

The intersections per se are numbered, and the road interval is expressed by using two numbers.

How to display the traffic congestion information in Figs. 10 to 12 will be described. When the "position information identifier 1" (Fig. 10) is used, the congestion information is displayed as "position information identifier is 214,and the conjested block is 250m to 450m". When the "position information identifier2" (Fig. 11) is used for displaying the same information, its display is "the position information identifier is 54, the direction is the reverse direction, and the conjested block is 250m to 450m".

When the same information is displayed by using the "position information identifier " (Fig. 12), the display is "the position information identifier is 312 to 355, and the conjested block is 250m to 450m".

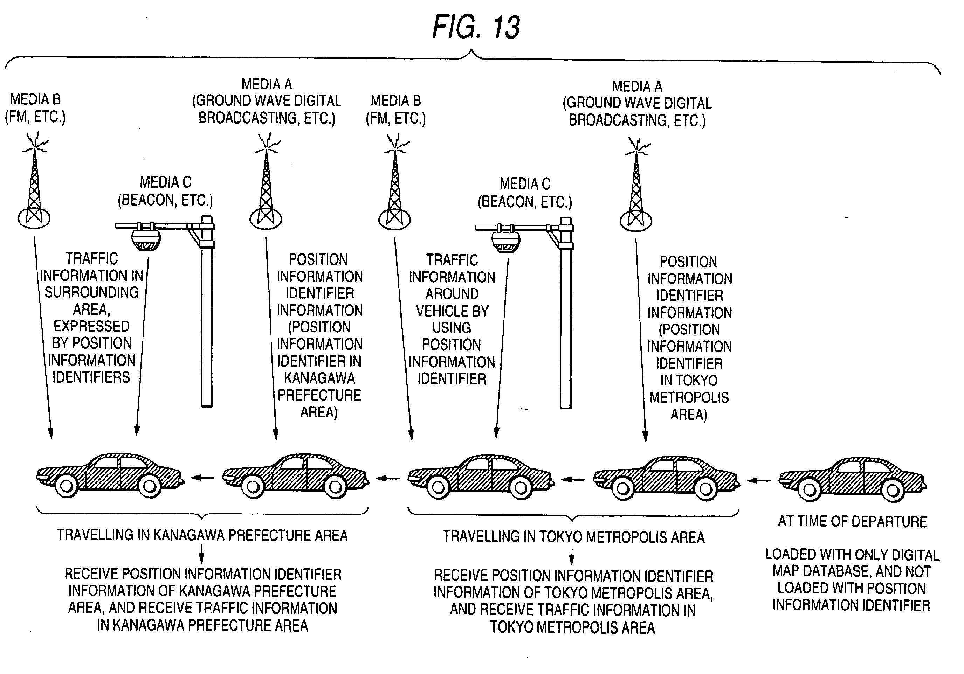

An application other than the transmission of the updated position information identifier in the embodiment system, is shown in Fig. 13.

In this example, at the start, the on-board navigation device contains only the digital map, and it sends, as needed, necessary information to a currently traveling area (further it may be what is obtained by extracting only the links from the information provided). Subsequently, the vehicle carrying the on-board navigation device further travels, and the vehicle's position changes with its traveling. The position information identifier is updated with the changing vehicle's position.

In a specific example, a vehicle which holds only the digital map information at the time of its starting, starts from a location in the Tokyo Metropolitan area, in a state that it is not loaded with the position information identifier. During its traveling in the Tokyo Metropolitan area, the vehicle receives the position information identifiers in the Metropolitan area, and traffic information in the same area. When the vehicle further travels and enters the Kanagawa prefecture area, the vehicle receives the position information identifiers in the Kanagawa prefecture area and traffic information in the same area.

While the present invention has been described in detail and using a specific embodiment, it should be understood that the invention may variously be modified, altered and changed within the true spirits and scope of the invention.

This application is based on Japanese Patent Application (Application No. 2000-375321), filed Dec. 8, 2000.

### <Industrial Applicability>

As seen from the foregoing description, the system of the invention is capable of supplementarily supporting a scheme of providing information by using the position information identifiers, and lightening the burden imposed on the map data manufacturer in order to maintain the scheme of providing information.

Further, there is no need of transmitting the new and old position information identifiers redundantly to the VICS information. Accordingly, the efficiency of the data transmission is improved, and the resultant energy may be used for enriching the information service.

Where the position information identifier transmitting method of the invention is employed, the receiving side device reliablymakes the correspondence between the position information identifier and the position on the digital map even if different digital map data is used.

## Claims

1. An information providing system for providing a road position and traffic event information to a receiving apparatus including a digital map database, the information providing system comprising:
a. first information providing apparatus for transmitting position information identifiers information defining a relationship between geographic information of the road position and position information identifiers to the receiving device; and
a second information providing apparatus for transmitting the traffic event information, the traffic event information being represented by the position information identifiers,
**characterised in that**
said position information identifiers are unique identifiers being independent of corresponding geographic information.

2. An information providing system according to claim 1,
wherein the position information identifiers transmitted from the first information providing apparatus to the receiving apparatus is adapted to a region where the receiving apparatus is located.

3. An information providing system according to claim 1.
wherein the position information identifiers include link information between nodes.

4. A receiving apparatus including a digital map database and being capable of receiving road position and traffic event information, the receiving apparatus comprising:
a first receiver for receiving position information identifiers information defining a relationship between geographic information of the road position and position information identifiers from a first information providing apparatus;
a second receiver for receiving the traffic event information, the traffic event information being represented by the position information identifiers,
wherein the position information identifiers stored in the receiving apparatus are updated for the region,
**characterised in that**
said position information identifiers are unique identifiers being independent of corresponding geographic information.

5. A receiving apparatus according to claim 4, further comprising:
means for identifying a position defined by the position information identifier on the digital map; and
means for displaying the identified position on the digital map.

6. A receiving apparatus according to claim 4, wherein the position information identifiers include link information between nodes, and the receiving apparatus carries out map matching process of the position information identifier to the digital map database to determine a position of the position information identifiers on the digital map.

7. A method of providing road information and traffic event information to a receiving apparatus including a digital map database, the method comprising:
a step of transmitting position information identifiers information defining a relationship between geographic information of the road position and position information identifiers from a first information providing apparatus to the receiving apparatus;
a step of transmitting the traffic event information around a position of the receiving apparatus from the second information providing apparatus, the traffic event information being represented by the position information identifiers,
**characterised in that**
the first information providing apparatus transmits the position information identifiers information corresponding to a region where the receiving apparatus is located, and that
said position information identifiers are unique identifiers being independent of corresponding geographic information.

8. A method according to claim 7, wherein the position information identifiers include link information between nodes.

## Patentansprüche

1. Informationsbereitstellungssystem zum Bereitstellen einer Streckenpositions- und Verkehrsereignisinformation an eine Empfangsvorrichtung, die eine digitale Kartendatenbank enthält, wobei das Informationsbereitstellungssystem umfasst:
eine erste Informationsbereitstellungsvorrichtung zum Übertragen von Positionsinformations-Identifikatoreninformation, die eine Beziehung zwischen geografischer Information der Streckenposition und Positionsinformations-Identifikatoren definiert, zu der Empfangsvorrichtung und
eine zweite Informationsbereitstellungsvorrichtung zum Übertragen der Verkehrsereignisinformation, wobei die Verkehrsereignisinformation durch die Positionsinformations-Identifikatoren dargestellt wird,
**dadurch gekennzeichnet, dass**
die Positionsinformations-Identifikatoren eindeutige Identifikatoren sind, die unabhängig von entsprechender geografischer Information sind.

2. Informationsbereitstellungssystem nach Anspruch 1, wobei die von der ersten Informationsbereitstellungsvorrichtung zu der Empfangsvorrichtung übertragenen Positionsinformations-Identifikatoren an eine Region angepasst sind, in der sich die Empfangsvorrichtung befindet.

3. Informationsbereitstellungssystem nach Anspruch 1, wobei die Positionsinformations-Identifikatoren Linkinformation zwischen Knoten enthalten.

4. Empfangsvorrichtung, die eine digitale Kartendatenbank enthält und in der Lage ist, Streckeninformation und Verkehrsereignisinformation zu empfangen, wobei die Empfangsvorrichtung umfasst:
einen ersten Empfänger zum Empfangen von Positionsinformations-Identifikatoreninformation, die eine Beziehung zwischen geografischer Information der Streckenposition und Positionsinformations-Identifikatoren definiert, von einer ersten Informationsbereitstellungsvorrichtung,
einen zweiten Empfänger zum Empfangen der Verkehrsereignisinformation, wobei die Verkehrsereignisinformation durch die Positionsinformations-Identifikatoren dargestellt wird,
wobei die in der Empfangsvorrichtung gespeicherten Positionsinformations-Identifikatoren für die Region aktualisiert werden,
**dadurch gekennzeichnet, dass**
die Positionsinformations-Identifikatoren eindeutige Identifikatoren sind, die unabhängig von entsprechender geografischer Information sind.

5. Empfangsvorrichtung nach Anspruch 4, die des Weiteren umfasst:
Mittel zum Identifizieren einer Position, die durch den Positionsinformations-Identifikator auf der digitalen Karte definiert wird, und
Mittel zum Anzeigen der identifizierten Position auf der digitalen Karte.

6. Empfangsvorrichtung nach Anspruch 4, wobei die Positionsinformations-Identifikatoren Linkinformation zwischen Knoten enthalten und die Empfangsvorrichtung den Kartenanpassungsprozess des Positionsinformations-Identifikators an der digitalen Kartendatenbank ausführt, um eine Position des Positionsinformations-Identifikators auf der digitalen Karte zu bestimmen.

7. Verfahren zum Bereitstellen von Streckeninformation und Verkehrsereignisinformation an eine Empfangsvorrichtung, die eine digitale Kartendatenbank enthält, wobei das Verfahren umfasst:
einen Schritt des Übertragens von Positionsinformations-Identifikatoreninformation, die eine Beziehung zwischen geografischer Information der Streckenposition und Positionsinformations-Identifikatoren definiert, von einer ersten Informationsbereitstellungsvorrichtung zu der Empfangsvorrichtung,
einen Schritt des Übertragens der Verkehrsereignisinformation, um eine Position der Empfangsvorrichtung herum, von der zweiten Informationsbereitstellungsvorrichtung, wobei die Verkehrsereignisinformation durch die Positionsinformations-Identifikatoren dargestellt wird,
**dadurch gekennzeichnet, dass**
die erste Informationsbereitstellungsvorrichtung die Positionsinformationsldentifikatorinformationen entsprechend einer Region, in der sich die Empfangsvorrichtung befindet, überträgt und dass die Positionsinformations-Identifikatoren eindeutige Identifikatoren sind, die unabhängig von entsprechender geografischer Information sind.

8. Verfahren nach Anspruch 7, wobei die Positionsinformations-Identifikatoren Linkinformation zwischen Knoten enthalten.

## Revendications

1. Système de fourniture d'informations destiné à fournir une position sur une route et des informations d'événements de trafic à un dispositif de réception comprenant une base de données cartographiques numériques, le système de fourniture d'informations comprenant :
un premier dispositif de fourniture d'informations destiné à transmettre des informations d'identificateurs d'informations de position définissant une relation entre des informations géographiques de la position sur la route et les identificateurs d'informations de position au dispositif de réception, et
un second dispositif de fourniture d'informations destiné à transmettre les informations d'événements de trafic, les informations d'événements de trafic étant représentées par les identificateurs d'informations de position,
**caractérisé en ce que**
lesdits identificateurs d'informations de position sont des identificateurs uniques qui sont indépendants des informations géographiques correspondantes.

2. Système de fourniture d'informations selon la revendication 1,
dans lequel les identificateurs d'informations de position transmis du premier dispositif de fourniture d'informations au dispositif de réception sont adaptés à une région où le dispositif de réception est situé.

3. Système de fourniture d'informations selon la revendication 1,
dans lequel les identificateurs d'informations de position comprennent des informations de liaisons entre les noeuds.

4. Dispositif de réception comprenant une base de données cartographiques numériques et qui est capable de recevoir une position sur une route et des informations d'événements de trafic, le dispositif de réception comprenant :
un premier récepteur destiné à recevoir des informations d'identificateurs d'informations de position définissant une relation entre les informations géographiques de la position sur une route et les identificateurs d'informations de position provenant d'un premier dispositif de fourniture d'informations,
un second récepteur destiné à recevoir les informations d'événement de trafic, les informations d'événement de trafic étant représentées par les identificateurs d'informations de position,
où les identificateurs d'informations de position mémorisés dans le dispositif de réception sont mis à jour pour la région,
**caractérisé en ce que**
lesdits identificateurs d'informations de position sont des identificateurs uniques qui sont indépendants des informations géographiques correspondantes.

5. Dispositif de réception selon la revendication 4, comprenant en outre:
un moyen destiné à identifier une position définie par l'identificateur d'informations de position sur la carte numérique, et
un moyen destiné à afficher la position identifiée sur la carte numérique.

6. Dispositif de réception selon la revendication 4, dans lequel les identificateurs d'informations de position comprennent des informations de liaisons entre noeuds et le dispositif de réception exécute un traitement de mise en correspondance de carte de l'identificateur d'informations de position avec la base de données cartographiques numériques pour déterminer une position des identificateurs d'informations de position sur la carte numérique.

7. Procédé de fourniture d'informations routières et d'informations d'événement de trafic à un dispositif de réception, comprenant une base de données cartographiques numériques, le procédé comprenant:
une étape de transmission d'informations d'identificateurs d'informations de position définissant une relation entre des informations géographiques de la position sur une route et des identificateurs d'informations de position provenant d'un premier dispositif de fourniture d'informations au dispositif de réception,
une étape de transmission des informations d'événement de trafic autour d'une position du dispositif de réception à partir du second dispositif de fourniture d'informations, les informations d'événements de trafic étant représentées par les identificateurs d'informations de position,
**caractérisé en ce que**
le premier dispositif de fourniture d'informations transmet les informations d'identificateurs d'informations de position correspondant à une région où se situe le dispositif de réception et **en ce que**
lesdits identificateurs d'informations de position sont des identificateurs uniques qui sont indépendants des informations géographiques correspondantes.

8. Procédé selon la revendication 16, dans lequel les identificateurs d'informations de position comprennent des informations de liaisons entre noeuds.
